# EUROPÄISCHE PATENTSCHRIFT

(11) **EP 2 990 309 B1**
(45) Veröffentlichungstag und Bekanntmachung des Hinweises auf die Patenterteilung: **17.01.2018**
(21) Anmeldenummer: 15183201.1
(22) Anmeldetag: 31.08.2015
(51) Int. Cl.: B62D 33/037

(54) **BORDWANDVERSCHLUSS**
SIDE WALL CLOSURE
FERMETURE DE HAYON

(30) Priorität: 01.09.2014 DE 102014112576
(43) Veröffentlichungstag der Anmeldung: 02.03.2016
(73) Patentinhaber: Winterhoff GmbH, 58339 Breckerfeld (DE)
(72) Erfinder: WINTERHOFF, Ulrich, 58339 Breckerfeld (DE)
(74) Vertreter: Kleine, Hubertus

(56) Entgegenhaltungen:
- EP-A1- 2 567 882
- DE-A1- 2 611 077
- DE-U1- 29 814 325

## Beschreibung

Die Erfindung betrifft einen Bordwandverschluss nach dem Oberbegriff des Anspruchs 1.

Derartige Bordwandverschlüsse finden insbesondere an den Bordwänden von Anhängern, vornehmlich Pkw-Anhängern oder Pritschen-Fahrzeugen Verwendung, um zum einen einen sicheren Verschluss bei hochgestellten Bordwänden zu bilden und zum anderen ein einfaches Öffnen der Bordwände, d.h. ein einfaches Lösen des Verschlusses zu ermöglichen.

Derartige Bordwandverschlüsse sind in vielen Ausführungsvarianten bekannt. Eine konstruktive Lösung ist in der DE 23 08 744 A1 offenbart, eine andere in der DE 20 2006 011 082 U1. Beide daraus bekannten Bordwandverschlüsse weisen einen Verriegelungsmechanismus auf, mit einem an einer ersten Bordwand ortsfest gehaltenen Riegelelement, in das in Schließstellung zur formschlüssigen Verriegelung ein Verschlusselement eingreift, das durch einen angeschlossenen Handhebel betätigbar ist, wobei das Verschlusselement und der Handhebel als Bestandteil einer Schließeinrichtung an der zweiten Bordwand befestigt ist.

Ein gattungsgemäßer Bordwandverschluss ist aus der DE 26 11 077 A1 bekannt. Bei dieser Konstruktion greift in Schließstellung des Bordwandverschlusses ein ortsfest an der Bordwand gehaltener Zapfen in das gabelförmige Ende eines schwenkbaren Verschlusselementes einer Schließeinrichtung ein. Dieses Verschlusselement wird in Schließstellung durch einen federbelasteten Sperrbolzen blockiert.

Üblicherweise sind an einer Bordwand zwei Schließeinrichtungen, jeweils endseitig positioniert angeordnet, während das jeweils zugeordnete Riegelelement an der dazu benachbarten ersten Bordwand befestigt ist.

Zum Öffnen der Bordwand, um diese aufzuklappen und einen Zugriff auf den Anhänger zu erhalten, müssen die Bordwandverschlüsse geöffnet werden, wozu dies der Reihe nach erfolgt, d.h. zunächst wird ein Bordwandverschluss geöffnet und dann der gegenüberliegende, wobei die Verriegelung praktisch mit Öffnen des Bordwandverschlusses aufgehoben ist.

Allerdings ergeben sich in der Praxis erhebliche Probleme, da sich nach einem Öffnen des ersten Bordwandverschlusses die Bordwand als einseitig eingespannter Hebel darstellt, mit einer entsprechenden Belastung des zweiten, noch zu öffnenden Bordwandverschlusses.

Bei anderen bekannten Konstruktionen ist die Schließeinrichtung an einem Pfosten gehalten, der fest oder lösbar mit einem Rahmen des Anhängers verbunden ist. D.h., für die erste und zweite Bordwand sind an dem sozusagen gemeinsamen Pfosten zwei Schließeinrichtungen angeordnet, die jeweils mit einem an der ersten Bordwand befestigten Riegelelement korrespondiert.

Nachteilig gestaltet sich der Einsatz der bekannten Bordwandverschlüsse vor allem beim Schließen von Bordwänden, da hierzu zunächst ein Bordwandverschluss in Schließstellung gebracht werden muss und anschließend der andere, an der gegenüberliegenden Seite.

Abgesehen davon, dass auch in diesem Fall die Bordwand lediglich einseitig gehalten wird, gestaltet sich der Arbeitsablauf hierzu umständlich und steht einer stets geforderten diesbezüglichen Optimierung entgegen.

Der Erfindung liegt die Aufgabe zugrunde, einen Bordwandverschluss der gattungsgemäßen Art so weiterzuentwickeln, dass ein gleichzeitiges Öffnen und Verschließen beider Bordwandverschlüsse einer Bordwand möglich ist.

Dieser Aufgabe wird durch einen Bordwandverschluss mit den Merkmalen des Anspruchs 1 gelöst.

Die Konstruktion des neuen Bordwandverschlusses gestattet eine deutlich vereinfachte Handhabung beim Öffnen und Schließen der jeweiligen Bordwand. Dies vor allem, weil nunmehr beide einer Bordwand zugeordneten Bordwandverschlüsse solange in Sperrfunktion bleiben, bis die Bordwand verschwenkt wird und zwar sowohl beim Öffnen wie auch beim Schließen.

Zwar muss zum Öffnen jeder Bordwandverschluss separat entriegelt werden, jedoch bleibt dieser in seiner Halteposition, d.h., die Schließeinrichtung bleibt in Korrespondenz mit dem Riegelelement, also in Haltestellung, bis durch die Schwenkbewegung der Bordwand die Schließeinrichtung außer Eingriff mit dem Riegelelement gebracht wird, und zwar bei beiden Bordwandverschlüssen gleichzeitig.

Entscheidend hierfür ist, dass nach Betätigung des Handhebels im Sinne eines Aufschwenkens der axial verschiebbare Sperrbolzen außer Eingriff mit dem Verschlusselement gebracht wird, wozu der Sperrbolzen in einer Zwangsführung am Handhebel geführt wird, die als Kulissenführung ausgebildet ist. Dabei weist der Handhebel eine schräg zur Achse des Sperrbolzens verlaufende Kulissenbahn auf, in die ein Kulissenzapfen des Sperrbolzens eingreift. Bei einem Aufschwenken des Handhebels wird somit der Sperrbolzen gegen die Kraft einer Druckfeder aus dem Eingriff mit dem Verschlusselement gezogen, so dass dies frei liegt, jedoch zunächst noch in Korrespondenz mit dem Riegelelement in einer nicht blockierten Schließstellung.

Das Verschlusselement, das ebenfalls verschwenkbar ist, ist an dem dem Angriffsbereich des Sperrbolzens gegenüberliegenden Endbereich gabelförmig ausgebildet und zwar derart, dass bei einem Verschwenken der das Riegelelement tragenden Bordwand das Verschlusselement zunächst durch das Riegelelement verschwenkt wird, bis in einen Bereich, in dem das Riegelelement, bevorzugt ein Riegelzapfen, außer Eingriff mit dem Verschlusselement gelangt.

Um den Sperrbolzen in der Nichteingriffsstellung zu halten, in der das Verschlusselement den Riegelzapfen noch in seiner Schließposition hält, ist ein quer zur Achsrichtung des Sperrbolzens axial federbelastet bewegbarer Arretierzapfen vorgesehen, der nach einer Betätigung des Sperrbolzens durch den Handhebel an der dem Verschlusselement zugewandten Stirnseite des Sperrbolzens anliegt oder an diesem arretierend eingreift.

Bei einer Verschwenkung der den Riegelzapfen tragenden Bordwand, bei der, wie erwähnt, das Verschlusselement den Riegelzapfen frei gibt, ebenfalls durch Verschwenken, wird der Arretierzapfen durch das Verschlusselement außer Eingriff mit dem Sperrbolzen gebracht, so dass dieser federbelastet zurückgeführt wird und dann an dem dann sozusagen verschwenkten Verschlusselement anliegt und zwar an einer kurvig geformten Kante des Verschlusselementes.

Beim Schließen der den Arretierzapfen tragenden Bordwand greift der Arretierzapfen zunächst in die gabelförmige Ausnehmung des Verschlusselementes und verschwenkt dies im weiteren Verlauf, auch unter Betätigung des Handhebels in eine Sperrposition gegenüber dem Verschlusselement.

Damit wird überdies erreicht, dass sich der Bordwandverschluss nicht selbsttätig öffnen kann, wie dies durch einschlägige Vorschriften gefordert ist.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen montierten Bordwandverschluss in Schließstellung, in einem Längsschnitt
- Figur 2: den Bordwandverschluss nach Fig. 1 in einer teiloffenen Stellung
- Figur 3: den Bordwandverschluss in einer geöffneten Position
- Figur 4: zwei ? montierte Bordwandverschlüsse, jeweils in unterschiedlichen Funktionsstellungen.

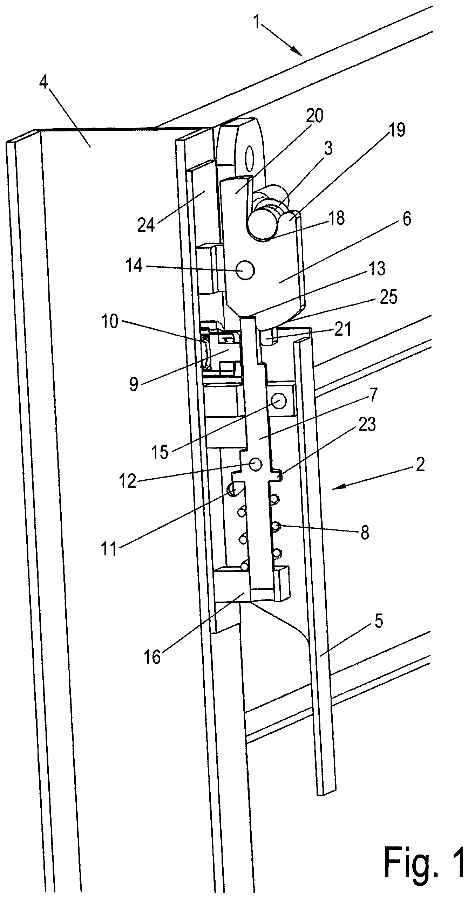

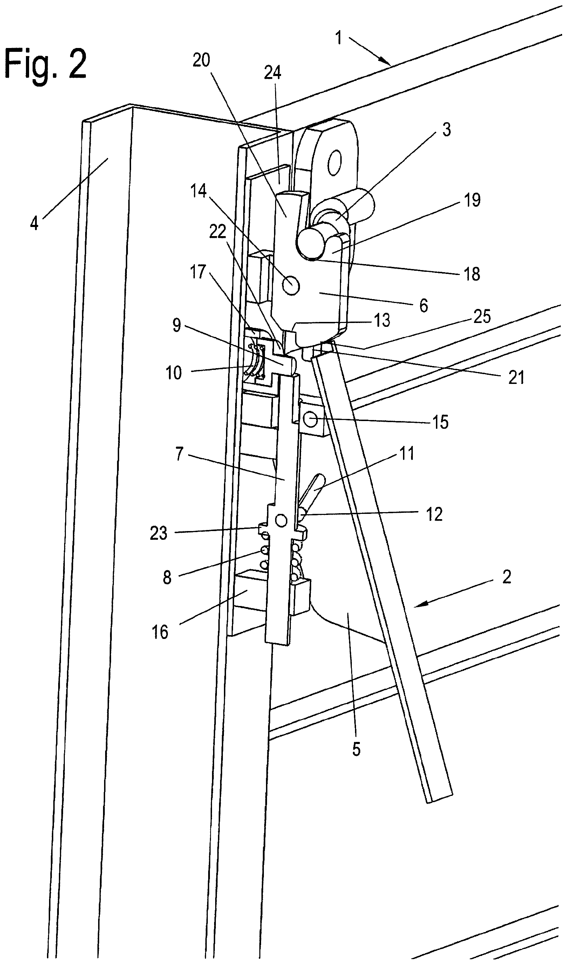

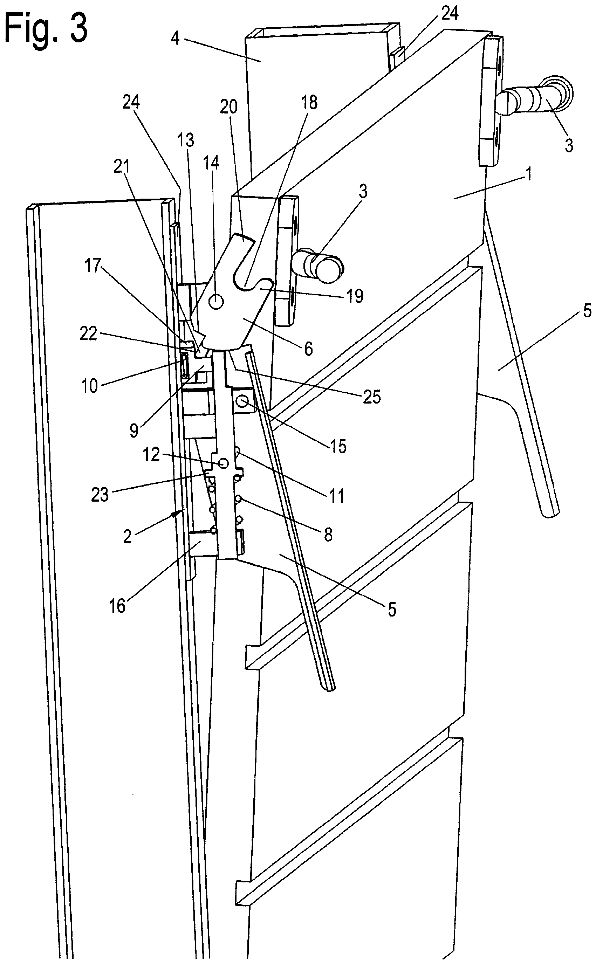

In der Figur 1 ist, ebenso wie in den Figuren 2 und 3 in perspektivischer Ansicht, ein Bordwandverschluss in Schließstellung abgebildet, in der eine Bordwand 1 eines Anhängers gegen ein Verschwenken gesichert gehalten ist.

Hierzu ist eine Schließeinrichtung 2 an einem anhängerseitigen Pfosten 4 mittels einer Montageplatte 24 befestigt. Diese Schließeinrichtung 2 weist ein an einer Schwenkachse 14 schwenkbar gelagertes, plattenförmiges Verschlusselement 6 auf, das an einem Ende als gabelförmige Aufnahme 18 gestaltet ist, mit einem zur Montageplatte 24 hin längeren Zinken 20 und einem gegenüberliegenden kürzeren Zinken 19.

In der Aufnahme 18 liegt zur Sicherung der Bordwand 1 ein daran befestigter Riegelzapfen 3 formschlüssig ein, der ein Riegelelement bildet.

Gemäß der Erfindung ist ein mit einer Druckfeder 8 federbelastet axial verschiebbarer Sperrbolzen 7 vorgesehen, der in Schließstellung endseitig in einer Ausklinkung 13 des Verschlusselementes 6 derart einliegt, dass eine Verschwenkung in Richtung des kürzeren Zinkens 19 verhindert wird.

Die Druckfeder 8 liegt im Übrigen zum einen an einem an der Montageplatte 24 angeschlossenen Führungsbock 16 an, der auch eine Führung für den Sperrbolzen 7 bildet, und zum anderen an einem am Sperrbolzen 7 angeordneten Bündchen 23.

Zum Verschieben des Sperrbolzens 7 gegen die Kraft der Druckfeder 8 zur Entriegelung des Verschlusselementes 6, wie in der Figur 2 dargestellt, ist ein Handhebel 5, der an einer Drehachse 15 schwenkbar gelagert ist, von einer zum Sperrbolzen 7 parallelen Schließstellung, entsprechend der Figur 1, aufzuziehen in eine abgewinkelte Stellung.

Dabei steht der Sperrbolzen 7 in Korrespondenz mit dem Handhebel 5, wozu letzterer eine schräg zur Achsrichtung des Sperrbolzens 7 und in Öffnungsrichtung ansteigend verlaufende Kulissenbahn 11 aufweist, in die ein Kulissenstift 12 des Sperrbolzens 7 eingreift.

Bei einem Verschwenken des Handhebels 5 in die in der Figur 2 gezeigte Stellung, wird der Sperrbolzen 7 aus seiner Verriegelungsstellung durch die Zwangsführung der Kulissenbahn 11 gezogen.

Um diese Stellung des Sperrbolzens 7 zu halten, ist ein quer zu dessen Achse ein durch eine Druckfeder 10 axial bewegbarer Arretierzapfen 9 vorgesehen, der in einer Hülse 17 gelagert ist und der bei der in der Figur 2 gezeigten Position an der zugeordneten Stirnseite des Sperrbolzens 7 anliegt.

In dieser Stellung der Schließeinrichtung 2 ist zwar das Verschlusselement 6 entriegelt, jedoch nicht verschwenkt, so dass der Riegelzapfen 3 in seiner ursprünglichen Stellung verharrt, d.h., die Bordwand 1 ist geschlossen.

Da die Bordwand 1 üblicherweise durch zwei Bordwandverschlüsse gesichert ist, deren Schließeinrichtung 2 jeweils an einem Pfosten 4 befestigt ist, kann in der sozusagen teilgeöffneten Stellung nach der Figur 2 die zweite Schließeinrichtung 2 geöffnet werden. In der Figur 3 ist im Übrigen der zweite Bordwandverschluss erkennbar.

Diese Figur gibt eine Endstellung der Bordwand 1 wieder, bei der die Verschlusselemente 6 beider Schließeinrichtungen 2 derart verschwenkt sind, dass der Riegelzapfen 3 aus dem Eingriffsbereich, d.h. aus der Aufnahme 18 herausgeführt ist.

Hierzu ist die Bordwand an einer beliebigen Stelle anzufassen und abzuschwenken, wobei der Riegelzapfen 3 gegen den kürzeren Zinken 19 drückt und das Verschlusselement 6 um die Schwenkachse 14 so weit verschwenkt, dass der Riegelzapfen 3 frei liegt.

Mit der Verschwenkung erfolgt ein Zurückdrücken des Arretierzapfens 9 entgegen der Federkraft der Druckfeder 10 in eine Position, in der der Sperrbolzen 7 sich federbelastet in Richtung des Verschlusselementes 6 verschiebt, wo er an einer konvexen Kurvenkante 25 zur Anlage kommt.

Zum Zurückdrücken des Arretierzapfens 9 ist an dem Verschlusselement 6 mindestens eine Drucknase 21 angeordnet, die an einer Anlagefläche 22 des Arretierzapfens 9 anliegt.

Beim öffnenden Verschwenken der Bordwand 1 und dem damit einhergehenden Verschwenken des Verschlusselementes 6 in die in der Figur 3 gezeigte Position, wird die der Aufnahme 18 des Verschlusselementes 6 gegenüberliegend angeordnete Drucknase 21 gegen die Anlagefläche 22 und damit gegen den Arretierzapfen 9 gedrückt, bis dieser aus seiner Anlageposition am Sperrbolzen 7 gerät.

Beim Schließen der Bordwand 1 wird das Verschlusselement 6 durch Andruck des Riegelzapfens 3 an den längeren Zinken 20 in die in der Figur 1 gezeigte Stellung gebracht, in der dann der Sperrbolzen 7 in die Ausklinkung 13 gelangt, so dass die Verschwenkung des Verschlusselementes 6 blockiert ist.

Beim Schließen der Bordwand 1, was durch Andrücken daran erfolgt, wird der Handhebel 5, bedingt durch die Kulissenführung, in seine Ausgangsposition verschwenkt.

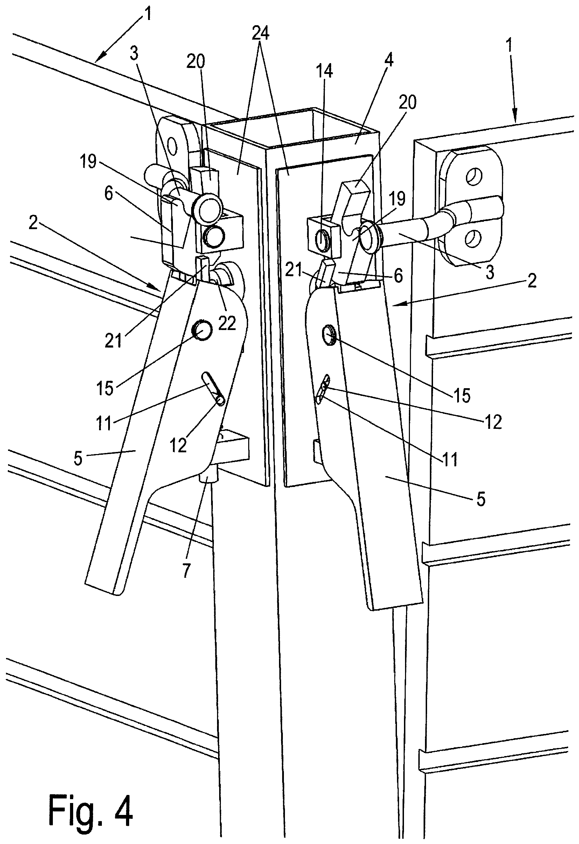

In der Figur 4 ist der Eckbereich eines Anhängers abgebildet, wobei an dem Pfosten 4, im Beispiel ein Eckpfosten, an zwei rechtwinklig zueinander benachbarten Seitenflächen des Pfostens 4 jeweils eine Schließeinrichtung 2 befestigt ist, die jeweils mit einem Riegelzapfen 3 an der zugeordneten Bordwand 1 korrespondieren.

Dabei ist die linksseitig abgebildete Schließeinrichtung 2 in einer sozusagen halb geöffneten Stellung gezeigt, während die rechtsseitige Schließeinrichtung 2 vollständig geöffnet ist, d.h., der Riegelzapfen 3 wird nicht mehr im Verschlusselement 6 gehalten. Zu erkennen ist auch die jeweils unterschiedliche Lage des Kulissenstiftes 12 in der Kulissenbahn 11, wobei die Stellung der linksseitigen Schließeinrichtung 2 der in der Figur 2 im Schnitt dargestellten und die Abbildung der rechtsseitigen Schließeinrichtung 2 die Stellung entsprechend der Figur 3 wiedergibt.

### Bezugszeichenliste

- 1: Bordwand
- 2: Schließeinrichtung
- 3: Riegelzapfen
- 4: Pfosten
- 5: Handhebel
- 6: Verschlusselement
- 7: Sperrbolzen
- 8: Druckfeder
- 9: Arretierzapfen
- 10: Druckfeder
- 11: Kulissenbahn
- 12: Kulissenstift
- 13: Ausklinkung
- 14: Schwenkachse
- 15: Drehachse
- 16: Führungsbock
- 17: Hülse
- 18: Aufnahme
- 19: kurzer Zinken
- 20: langer Zinken
- 21: Drucknase
- 22: Anlagefläche
- 23: Bündchen
- 24: Montageplatte
- 25: Kurvenkante

## Patentansprüche

1. Bordwandverschluss, mit einem an einer Bordwand (1) ortsfest gehaltenen Riegelelement, an dem in Schließstellung zur formschlüssigen Verriegelung ein schwenkbares, durch einen Handhebel (2) betätigbares Verschlusselement (6) einer Schließeinrichtung (2) angreift, die einen federbelasteten, bei Betätigung des Handhebels (5) axial verschiebbaren Sperrbolzen (7) aufweist, **dadurch gekennzeichnet, dass** der Sperrbolzen (7) in Verriegelungsstellung am Verschlusselement (6), dessen Verschwenkbarkeit sperrend, anliegt und in Entriegelungsstellung in Verschieberichtung blockiert ist.

2. Bordwandverschluss nach Anspruch 1, **dadurch gekennzeichnet, dass** zur Blockierung des Sperrbolzens (7) daran ein demgegenüber ortsfester Arretierzapfen (9) an- oder eingreift.

3. Bordwandverschluss nach Anspruch 2, **dadurch gekennzeichnet, dass** der Arretierzapfen (9) quer zur Achsrichtung des Sperrbolzens (7) federbelastet axial verschiebbar ist.

4. Bordwandverschluss nach einem der Ansprüche 2 oder 3, **dadurch gekennzeichnet, dass** das Verschlusselement (6) mindestens eine Drucknase (21) aufweist, mit der bei Verschwenkung des Verschlusselementes (6) der Arretierzapfen (9) gegen den Druck einer Druckfeder (10) außer Eingriff mit dem Sperrbolzen (7) bringbar ist.

5. Bordwandverschluss nach einem der vorhergehenden Ansprüche, **dadurch gekennzeichnet, dass** der Sperrbolzen (7) in Verriegelungsstellung mit dem Verschlusselement (6) in dies formschlüssig eingreift.

6. Bordwandverschluss nach einem der vorhergehenden Ansprüche, **dadurch gekennzeichnet, dass** das Verschlusselement (6) eine Ausklinkung (13) aufweist, in die der Sperrbolzen (7) eingreift.

7. Bordwandverschluss nach einem der vorhergehenden Ansprüche, **dadurch gekennzeichnet, dass** das Verschlusselement (6) plattenförmig ausgebildet ist, dessen dem Sperrbolzen (7) zugewandte Kante als konvexe Kurvenkante (25) ausgebildet ist.

8. Bordwandverschluss nach einem der vorhergehenden Ansprüche, **dadurch gekennzeichnet, dass** das Verschlusselement (6) in dem dem Sperrbolzen (7) gegenüberliegenden Bereich eine gabelförmige Aufnahme (18) aufweist, die seitlich durch einen langen Zinken (20) und einen kurzen Zinken (19) begrenzt ist, wobei der kurze Zinken (19) in Öffnungsrichtung vor dem langen Zinken (20) angeordnet ist.

9. Bordwandverschluss nach Anspruch 8, **dadurch gekennzeichnet, dass** das Riegelelement als Riegelzapfen (3) ausgebildet ist, der in Schließstellung in der Aufnahme (18) einliegt.

10. Bordwandverschluss nach einem der vorhergehenden Ansprüche, **dadurch gekennzeichnet, dass** auf dem Sperrbolzen (7) eine Druckfeder (8) geführt ist, die sich einerseits an einem Bündchen (23) des Sperrbolzens (7) und andererseits an einem diesem gegenüber ortsfesten Führungsbock (16) abstützt, in dem der Sperrbolzen (7) geführt ist.

11. Bordwandverschluss nach einem der vorhergehenden Ansprüche, **dadurch gekennzeichnet, dass** der Handhebel (5) eine schräg zum Sperrbolzen (7) verlaufende Kulissenbahn (11) aufweist, in der ein Kulissenzapfen (12) des Sperrbolzens (7) geführt ist, wobei die Kulissenbahn (11) in Öffnungsrichtung des Handhebels (5) ansteigt.

12. Bordwandverschluss nach einem der vorhergehenden Ansprüche, **dadurch gekennzeichnet, dass** die Schließeinrichtung (2) an einem Pfosten (4) eines Anhängers festlegbar ist, während der Riegelzapfen (3) an der Bordwand (1) angeschlossen ist.

13. Bordwandverschluss nach einem der vorhergehenden Ansprüche, **dadurch gekennzeichnet, dass** der Handhebel (5) an einer ortsfesten Drehachse (15) und das Verschlusselement (6) an einer ortsfesten Schwenkachse (14) verschwenkbar gelagert sind.

14. Bordwandverschluss nach einem der Ansprüche 2 bis 4, **dadurch gekennzeichnet, dass** der Arretierzapfen (9) in einer ortsfesten Hülse (17) gelagert ist.

## Claims

1. A side wall latch, having a bolt element held fixed in place on a side wall (1), on which bolt element a pivotable latch element (6), which can be actuated by a hand lever (2), of a closing device (2) engages in the closing direction for the formfitting locking, which closing device has a spring-loaded blocking pin (7) axially displaceable upon actuation of the hand lever (5), **characterized in that** the blocking pin (7) is applied to the latch element (6) to block its pivoting capability in the locked position and is blocked in the displacement direction in the unlocked position.

2. The side wall latch according to Claim 1, **characterized in that** a securing stud (9), which is fixed in place in relation thereto, is applied to or engages on the blocking pin (7) to block it.

3. The side wall latch according to Claim 2, **characterized in that** the securing stud (9) is axially displaceable in a spring-loaded manner transversely to the axial direction of the blocking pin (7).

4. The side wall latch according to any one of Claims 2 or 3, **characterized in that** the latch element (6) has at least one pressure lug (21), using which, upon pivoting of the closure element (6), the securing stud (9) can be disengaged from the blocking pin (7) against the pressure of a compression spring (10).

5. The side wall latch according to any one of the preceding claims, **characterized in that** the blocking pin (7) engages in a formfitting manner in the latch element (6) in the locking position therewith.

6. The side wall latch according to any one of the preceding claims, **characterized in that** the latch element (6) has a notch (13), in which the blocking pin (7) engages.

7. The side wall latch according to any one of the preceding claims, **characterized in that** the latch element (6) is plate-shaped, and its edge facing toward the blocking pin (7) is formed as a convexly curved edge (25).

8. The side wall latch according to any one of the preceding claims, **characterized in that** the latch element (6) has, in the region opposite to the blocking pin (7), a forked receptacle (18), which is laterally delimited by a long prong (20) and a short prong (19), wherein the short prong (19) is arranged in front of the long prong (20) in the opening direction.

9. The side wall latch according to Claim 8, **characterized in that** the bolt element is designed as a bolt stud (3), which is inserted into the receptacle (18) in the closed position.

10. The side wall latch according to any one of the preceding claims, **characterized in that** a compression spring (8) is guided on the blocking pin (7), which spring is supported on one side on a shoulder (23) of the blocking pin (7) and on the other side on a guide block (16) fixed in place in relation thereto, in which the blocking pin (7) is guided.

11. The side wall latch according to any one of the preceding claims, **characterized in that** the hand lever (5) has a link track (11) extending diagonally in relation to the blocking pin (7), in which a link stud (12) of the blocking pin (7) is guided, wherein the link track (11) rises in the opening direction of the hand lever (5).

12. The side wall latch according to any one of the preceding claims, **characterized in that** the closing device (2) is fixable on a pillar (4) of a trailer, while the bolt stud (3) is attached to the side wall (1).

13. The side wall latch according to any one of the preceding claims, **characterized in that** the hand lever (5) is pivotably mounted on a fixed rotational axis (15) and the closure element (6) is pivotably mounted on a fixed pivot axis (14).

14. The side wall latch according to any one of Claims 2 to 4, **characterized in that** the securing stud (9) is mounted in a fixed sleeve (17).

## Revendications

1. Fermeture de ridelle, avec un élément de verrouillage maintenu fixe sur une ridelle (1), sur lequel s'engage, en position fermée, pour le verrouillage par complémentarité de forme, un élément de fermeture pivotant (6) pouvant être actionné par un levier à main (2) d'un dispositif de fermeture (2) qui présente un axe de blocage (7) sollicité par un ressort, pouvant coulisser axialement lorsque le levier à main (5) est actionné, **caractérisée en ce qu'**en position de verrouillage, l'axe de blocage (7) est en appui contre l'élément de fermeture (6), bloquant sa possibilité de pivotement, et, en position de déverrouillage, est bloqué dans la direction de coulissement.

2. Fermeture de ridelle selon la revendication 1, **caractérisée en ce que** pour bloquer l'axe de blocage (7), un tenon d'arrêt (9) fixe par rapport à celui-ci agit dessus ou s'y engage.

3. Fermeture de ridelle selon la revendication 2, **caractérisée en ce que** le tenon d'arrêt (9) peut coulisser axialement sous la contrainte d'un ressort transversalement à la direction axiale de l'axe de blocage (7).

4. Fermeture de ridelle selon l'une des revendications 2 ou 3, **caractérisée en ce que** l'élément de fermeture (6) présente au moins un bec de pression (21) avec lequel, lors du pivotement de l'élément de fermeture (6), le tenon d'arrêt (9) peut être désengagé de l'axe de blocage (7) contre la pression d'un ressort de compression (10).

5. Fermeture de ridelle selon l'une des revendications précédentes, **caractérisée en ce qu'**en position de verrouillage avec l'élément de fermeture (6), l'axe de blocage (7) s'engage dans celui-ci par complémentarité de forme.

6. Fermeture de ridelle selon l'une des revendications précédentes, **caractérisée en ce que** l'élément de fermeture (6) présente une encoche (13) dans laquelle s'engage l'axe de blocage (7).

7. Fermeture de ridelle selon l'une des revendications précédentes, **caractérisée en ce que** l'élément de fermeture (6) est réalisé en forme de plaque dont le bord tourné vers l'axe de blocage (7) est réalisé sous la forme d'un bord de came convexe (25).

8. Fermeture de ridelle selon l'une des revendications précédentes, **caractérisée en ce que** l'élément de fermeture (6) présente dans la zone opposée à l'axe de blocage (7) un logement (18) en forme de fourche qui est limité latéralement par une dent longue (20) et une dent courte (19), la dent courte (19) étant disposée avant la dent longue (20) dans la direction d'ouverture.

9. Fermeture de ridelle selon la revendication 8, **caractérisée en ce que** l'élément de verrouillage est réalisé sous la forme d'un tenon de verrouillage (3) qui, en position de fermeture, est logé dans le logement (18).

10. Fermeture de ridelle selon l'une des revendications précédentes, **caractérisée en ce que** sur l'axe de blocage (7) est guidé un ressort de compression (8) qui s'appuie d'un côté sur un épaulement (23) de l'axe de blocage (7) et, de l'autre côté, sur un support de guidage (16) fixe par rapport à celui-ci, dans lequel l'axe de blocage (7) est guidé.

11. Fermeture de ridelle selon l'une des revendications précédentes, **caractérisée en ce que** le levier à main (5) présente une voie de coulisse (11) s'étendant en biais par rapport à l'axe de blocage (7), dans laquelle un doigt de coulisse (12) de l'axe de blocage (7) est guidé, la voie de coulisse (11) s'élevant dans la direction d'ouverture du levier à main (5).

12. Fermeture de ridelle selon l'une des revendications précédentes, **caractérisée en ce que** le dispositif de fermeture (2) peut être fixé sur un montant (4) d'une remorque, tandis que le tenon de verrouillage (3) est raccordé à la ridelle (1).

13. Fermeture de ridelle selon l'une des revendications précédentes, **caractérisée en ce que** le levier à main (5) est monté pivotant sur un axe de rotation fixe (15) et l'élément de fermeture (6) sur un axe de pivotement fixe (14).

14. Fermeture de ridelle selon l'une des revendications 2 à 4, **caractérisée en ce que** le tenon d'arrêt (9) est monté dans un fourreau fixe (17).
